# EUROPEAN PATENT APPLICATION

(11) **EP 0 960 749 A2**
(43) Date of publication of application: **01.12.1999**
(21) Application number: 99304087.2
(22) Date of filing: 26.05.1999
(51) Int. Cl.: B60C 9/00, B60C 9/20, D07B 1/06

(54) **High strength steel cord for pneumatic tire**

(30) Priority: 15.12.1998 KR 9854983
(71) Applicant: Hankook Tire Co., Ltd., Kangnam-Gu, Seoul (KR)
(72) Inventor: Han, Yong Sig, Yusung-Gu, Taejon (KR)
(74) Representative: Orr, William McLean

(57) **Abstract**

A steel cord for pneumatic tires consisting of two filaments produced by the process of drawing carbon steel, plating brass on the surface of the carbon steel and then drawing and stranding the plated carbon steel, in which the diameter of each filament is from 0.15mm to 0.40mm, the carbon content of the carbon steel of the steel cord is 0.91 to 2.0% by weight and the steel cord is formed by twisting the two filaments such that the steel cord has a twisting pitch (lay length) in the range of 10 to 70 times the diameter of the filament.

## Description

The present invention relates to a steel cord which is a component material of a steel belt used in pneumatic tires. In particular the present invention relates to a steel cord for pneumatic tires which can lighten the weight of a tire, and reduce costs and fuel consumption rate through maintaining or improving the function of the steel cord, and simultaneously reducing the amounts of cord and rubber coating used.

Typically, a steel belt for a pneumatic tire means a belt formed by a steel cord having several twisted filaments, on which a thin layer of rubber is overlaid. In general, steel cord can be produced through the process of drawing carbon steel with a carbon content of 0.70-0.82% by weight, plating brass on the surface of the drawn steel so that it will adhere to the rubber, then drawing the plated steel again and stranding the carbon steel by using various methods.

The use of carbon steel with a carbon content of more than 0.7-0.82% by weight results in high strength. However, many problems arise in the manufacture of wire rod for steel cord because if the content of the carbon is increased, then when manufacturing wire rod, it is difficult to control carbon segregation and the distribution or size etc of the nonmetallic inclusions. Moreover, if there is much carbon segregation or the size of nonmetallic inclusions is not well controlled in the carbon steel, then when manufacturing wire rod for steel cord, these cause manufacturing problems, such as the problem of cutting during drawing, since it is hard to endure the heavy drawing process during the production of steel cord for tires, and accordingly the production of steel cord is difficult.

US patent no 5061557 discloses a cord of two twisted filaments made from steel with a carbon content of 0.70-0.90% by weight. Even though the strength of the cord can be partially increased by using steel with a carbon content of 0.80-0.90% by weight, such increases are not enough.

It is possible to produce and draw wire rod in carbon steel with a carbon content higher than that mentioned above, owing to improvements in the technology of metal refining and drawing. However, such a higher strength carbon steel, with a carbon content greater than that mentioned previously, has not previously been used in tires owing to the increase in weight. It is difficult to reduce the weight of steel cord necessary for a tire or to improve the performance of tires by using an increased carbon content steel cord.

The present invention can provide a high strength steel cord with high carbon content, which results in a lighter tire, cost savings and a lower fuel consumption rate while maintaining or improving the original performance of the tire and providing a lighter steel belt.

According to the present invention, there is provided a steel cord for pneumatic tires consisting of two filaments produced by the process of drawing carbon steel, plating brass on the surface of the carbon steel and then drawing and stranding the plated carbon steel, in which the diameter of each filament is from 0.15mm to 0.40mm, the carbon content of the carbon steel of the steel cord is 0.91 to 2.0% by weight and the steel cord is formed by twisting the two filaments such that the steel cord has a twisting pitch (lay length) in the range of 10 to 70 times the diameter of the filament.

The invention will now be described, by way of example only, with reference to the accompanying drawings, in which:
Figure 1 shows a plan view of a 1x2 steel cord according to the invention; and
Figure 2 shows a cross sectional view of the steel cord shown in Figure 1, along line 1-1.

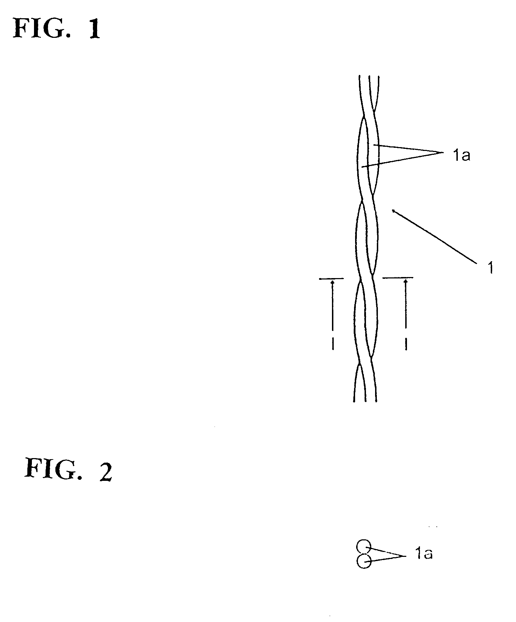

Figures 1 and 2 show a steel cord, designated generally by reference numeral 1, according to the present invention. The 1x2 steel cord 1 is of high strength. The steel cord includes two filaments 1a twisted together. Each filament 1a used in the cord has a diameter of 0.15-4.0mm. The cord has a twist pitch (lay length) of 10-70 times the diameter of each filament. The tensile strength of the filament prior to stranding into the steel cord 1 is greater than 340Kgf/mm².

Herein, the 1x2 steel cord means a cord formed by twisting two lengths of filament together in a constant direction at a constant twist pitch (lay length). The steel cord is formed such that: the stress level of fatigue limit of the 1x2 steel cord upon a completely reversed cycle of a stress fatigue test is greater than 90Kgf/mm²; the elasticity of the steel cord based on the loop test is greater than 90%; and the elongation of the steel cord in the low load range (0.2-1.6Kgf) is less than 0.10% so as to easily achieve the rubber coating.

In order to achieve suitable reinforcement, lower weight and cost savings when the 1x2 steel cord is used in the steel belt of a tire, the steel cord is formed to satisfy the following equation$\text{n} \text{≥ 1.35 /} {\text{d}}^{\text{2}} \text{t} \text{= (2} \text{d} \text{+ 0.2) to (2} \text{d} \text{+ 2)}$ in which *d* is the diameter of the filament of the steel cord in mm, *n* is the number of steel cords per inch at the time of carrying out the rubber coating, and *t* is the thickness of the rubber coating in mm.

A comparison between the steel cord of the present invention and a prior art steel cord is shown in the following Table 1. The data of the present invention shown in Table 1 represents the physical properties of the steel cord in which a carbon steel wire rod with carbon content of 0.93% by weight is used, a filament diameter of 0.30mm is used and brass is plated on the surface of the filament. Furthermore, in Table 1, the numerals in parentheses in the rubber adhesion section indicates the percentage of samples for which rubber adhesion has been tested.

It will be seen that the steel cord of the present invention can provide a lighter tire, cost savings and lower fuel consumption rate, since the steel cord has sufficient strength but requires less material than conventional steel cord.

As described above, the present invention can reduce the overall tire weight and reduce the cost through use of a steel belt composed of high strength carbon steel and reduce the fuel consumption rate owing to a lower rolling resistance of the tire.

**Table 1**

| Items | | | Prior Art (2+2) | Present Invention (1 × 2) |
|---|---|---|---|---|
| Plating characteristics | plating material(Cu,Zn(wt%)) | | 63.7, 36.3 | 63.1, 36.9 |
| | plating thickness(µm) | | 0.25 | 0.24 |
| Mechanical properties | lay length(mm) | | 14.0 | 12.0 |
| | lay direction | | right | right |
| | diameter of filament(mm) | | 0.25 | 0.30 |
| | diameter of steel cord(mm) | | 0.66 | 0.61 |
| | breaking force(kgf) | | 62 | 51 |
| | elongation at break(%) | | 2.5 | 2.4 |
| | low load elongation(%) (0.2 ∼ 1.6kgf) | | 0.047 | 0.054 |
| | linear density(g/m) | | 1.56 | 1.12 |
| | elasticity(%) | | 96 | 97 |
| | stiffness(g-cm/a steel cord) (TABER stiffness tester) | | 33 | 30 |
| | RBT fatigue test (Rotating beam fatigue tester) | stress (90kgf/mm²) | more than 1 million cycles | more than 1 million cycles |
| | | stress (100kgf/mm²) | | more than 1 million cycles |
| Rubber adhesion force (kgf/0.5inch) (ASTM method) | initial(curing 160°C × 20 min) | | 58(100) | 50(100) |
| | heat aging(100°C) | 4 days | 56(95) | 51(95) |
| | | 8 days | 51(90) | 47(90) |
| | | 12 days | 49(90) | 44(90) |
| | humidity condition (70°C × 96%R/H) | 4 days | 58(95) | 47(90) |
| | | 8 days | 53(90) | 40(90) |
| | | 12 days | 46(85) | 36(85) |
| | hot water condition(70°C) | 4 days | 54(90) | 39(90) |
| | | 8 days | 54(90) | 36(80) |
| | | 12 days | 47(85) | 32(80) |
| | salinity condition (20% NaCl) | 4 days | 57(80) | 50(85) |
| | | 8 days | 53(80) | 49(80) |
| | | 12 days | 49(75) | 44(80) |

## Claims

1. A steel cord for pneumatic tires consisting of two filaments produced by the process of drawing carbon steel, plating brass on the surface of the carbon steel and then drawing and stranding the plated carbon steel, in which the diameter of each filament is from 0.15mm to 0.40mm, the carbon content of the carbon steel of the steel cord is 0.91 to 2.0% by weight and the steel cord is formed by twisting the two filaments such that the steel cord has a twisting pitch (lay length) in the range of 10 to 70 times the diameter of the filament.

2. A steel cord as claimed in claim 1, in which the tensile strength level of each filament prior to stranding into steel cord is greater than 340kgf/mm².

3. A steel cord as claimed in claim 1, in which the steel cord has the characteristics that the elongation of the steel cord is less than 0.10% for a load in the range 0.2 to 1.6kgf, the elasticity of the steel cord based on a loop test is greater than 90%, and the stress level of fatigue limit is greater than 90kgf/mm² upon a completely reversed cycle of a stress fatigue test.

4. A steel cord as claimed in claim 1, in which the steel cord is manufactured to satisfy the following equation$\text{n} \text{≥ 1.35 /} {\text{d}}^{\text{2}} \text{t} \text{= (2} \text{d} \text{+ 0.2) to (2} \text{d} \text{+ 2)}$ in which *d* is the diameter of the filament in mm, *n* is the number cords per inch at the time of carrying out the rubber coating and *t* is the thickness of the rubber coating in mm.

5. A pneumatic tire including a steel cord as claimed in claim 1.
